# EUROPÄISCHE PATENTANMELDUNG

(11) **EP 1 471 252 A2**
(43) Veröffentlichungstag der Anmeldung: **27.10.2004**
(21) Anmeldenummer: 04000567.0
(22) Anmeldetag: 14.01.2004
(51) Int. Cl.: F03B 17/06

(54) **Transportable Schwimmende Stromerzeugungsanlage**

(30) Priorität: 22.01.2003 HU 0302316
(71) Anmelder: SZATMARI, Ferenc, 98547 Viernau /Thür. (DE)
(72) Erfinder: SZATMARI, Ferenc, 98547 Viernau /Thür. (DE)

(57) **Zusammenfassung**

Die Stromerzeugung aus Wasserkraft erfolgt z. Z. mittels fest installierten Anlagen. Die Errichtung dieser fest installierten Anlagen wirkt sich nachteilig auf die Umwelt aus und ist kostenintensiv.

Um in fließenden Gewässern die vorhandenen Wasserenergieressourcen auszunutzen, ohne die Umwelt zu belasten, wurde die Transportable schwimmende Stromerzeugungsanlage (TSS) entwickelt. Mit der TSS ist es außerdem möglich, an den Stellen die Wasserkraft zu nutzen, wo die Errichtung fest installierter Anlagen nicht möglich ist oder wegen zu hoher Investitionskosten unrentabel wäre.

Die TSS ist vor Ort bis zum Betriebszustand vormontierbar und mittels eines Autokranes bewegbar. Nach der Verankerung und Herstellung der Verbindung ist die Anlage für einen automatischen Betrieb bereit und verbleibt an der angegebenen Position bis zur Generalüberholung.

Für einen dauerhaften und erfolgreichen Betrieb wurden die im Patent beschriebenen technischen Neuerungen erfunden bzw. an die besonderen Gegebenheiten angepasst. Die Störfaktoren sind auf ein Minimum reduziert, wodurch die Anlage zuverlässig und wirtschaftlich arbeitet.

## Beschreibung

Die Erfindung bezieht sich auf die transportable, schwimmende Stromerzeugungsanlage, die auf breiten, fließenden Gewässern zwischen der Schifffahrtsrinne und dem Ufer bzw. auf nicht schiffbaren Flüssen eingesetzt werden kann.

Für die Wasserkraftwerke müssen Sperrmauerwerke errichtet werden und die Turbinen werden mit großem Wasserdruck angetrieben. Mit der TSS können natürliche Obergewässerströmungen genutzt werden, was mit stationären Anlagen nicht möglich ist.

Es sind zwei bewegliche, aber stationäre Stromerzeugungsanlagen bekannt, so z. B. als MATRIX-Turbine im Laufwasserkraftwerk in Freudenau bei Wien. Hier werden mehrere Turbinen matrixförmig in einem Gestell angeordnet und in den Ein- und Auslaufschacht der Schleusenkammer für Frachtschiffe eingelassen.
Außerdem ist im Ärmelkanal eine Versuchsanlage auf eine auf dem Meeresboden gegründete Säule installiert, um die Meeresströmung für die Stromerzeugung zu nutzen. Diese Anlage lässt sich vertikal bewegen.

Gegenstand der hier vorliegenden Erfindung ist eine transportable, schwimmende Stromerzeugungsanlage, die mit den technischen Neuerungen sicher positioniert und automatisch betrieben werden kann. Die Abmaße der Anlage sind so gewählt, das sie auf dem Landweg transportabel ist und vor Ort betriebsfähig montiert wird. Die Anlage ist in betriebsfähigem Zustand ebenfalls transportabel (z. B. bei Treibeisgefahr).

Die großen und breiten fließenden Gewässer, wie z. B. der Donau haben zwischen der Schifffahrtsrinne und dem Ufer so viel Platz, das dort mehrere TSS stationiert werden können.

Die TSS werden manuell nahe der Schifffahrtsrinne stationiert. Sie halten danach automatisch die Position. Die Überwachung jeweils einer gekoppelten, komplexen Anlage erfolgt per Funkübertragung. Die Signal- und Bildübertragung erfolgen ebenfalls drahtlos.

Die Schwimmkörper (1 )sind so ausgelegt, das sie möglichst geringe Tauchtiefe haben. Der Schwimmkörper (1), der sich auf der entgegengesetzten Seite der Verankerung befindet, muss so ausgelegt sein, das durch Ballastwasser die Tauchtiefe geregelt werden kann. Bei einseitiger Verankerung und einer Wasserfließgeschwindigkeit >8m/s muss der Schwimmkörper (1 )auf der Seite der Verankerung größer gebaut wer-den. Die Schwimmkörper (1) müssen vorne am Bug ein keilförmiges Ruder haben, welches in beide Richtungen um 30° gedreht werden kann. Am Heck muss jeder Schwimmkörper (1) zwei Ruder haben. Die technischen Veränderungen beziehen sich nur auf die Leitschwimmeinheit.

Die am Heck angekoppelten Schwimmkörper (1) werden einfach symmetrisch und mit einem Ruder gebaut. Die Ruder, Pumpen und anderen beweglichen Teile werden elektrisch mittels Spindel bewegt. Auf die Schwimmkörper (1) werden komplette 24 V - LKW - Elektroanlagen installiert. Die Kopplung erfolgt jeweils mit LKW - Anhänger - Kupplungen. Die Größe der Schwimmkörper (1) muss so gewählt werden, das vor Inbetriebnahme bzw. nach Außerbetriebnahme leicht montiert bzw. demontiert werden kann und auf einem LKW - Tieflader transportiert werden kann.

Die Abweiser (3) sind aus Flacheisen bzw. Aluminium. Das keilförmige Teil wird mittels Seil (5) gehalten. Da der Abweiserhalterungsschwimmkörper (4) wegen der Turbulenzen relativ klein gewählt ist, wird er mit einem Gegengewicht (7) in Gleichgewicht gehalten. Das Gegengewicht (7) am Seilende befindet sich bei linksseitiger Verankerung der Anlage auf der rechten hinteren Seite. Die unteren Teile der Abweiser (3) tauchen ca. 15 - 20 cm ins Wasser und die oberen Teile ragen ca. 25 - 30 cm aus dem Wasser. Der Generator bzw. andere schwere Maschinenteile, wie z. B. die Batterie müssen ebenfalls bei einer linksseitigen Verankerung der Anlage auf der rechten hinteren Seite angebracht werden.

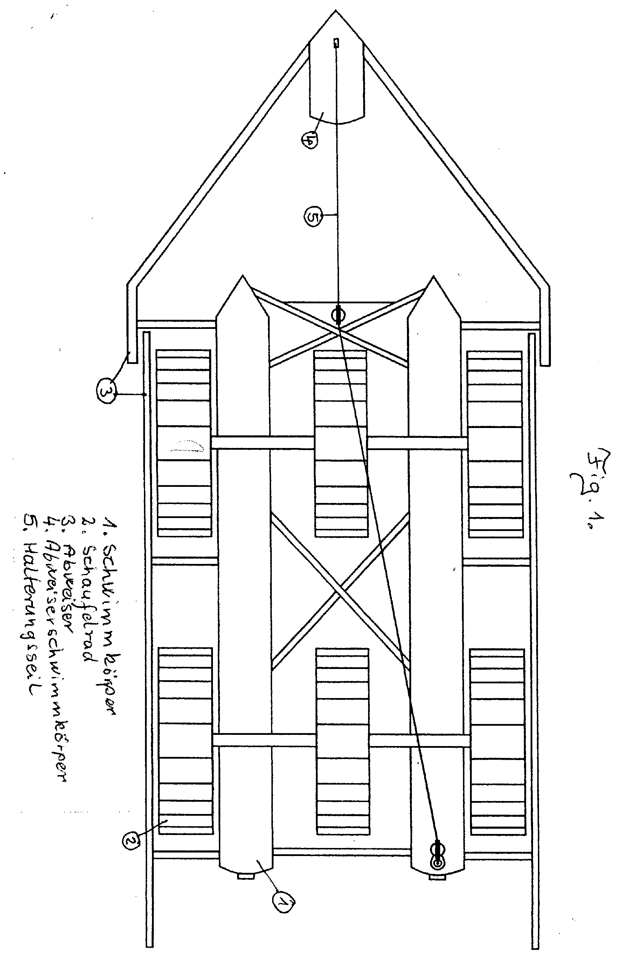

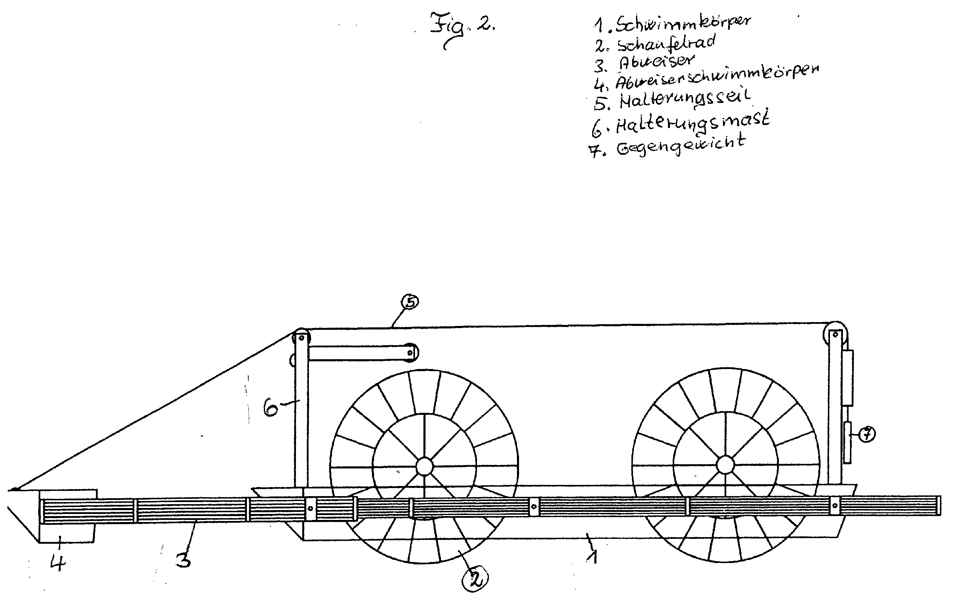

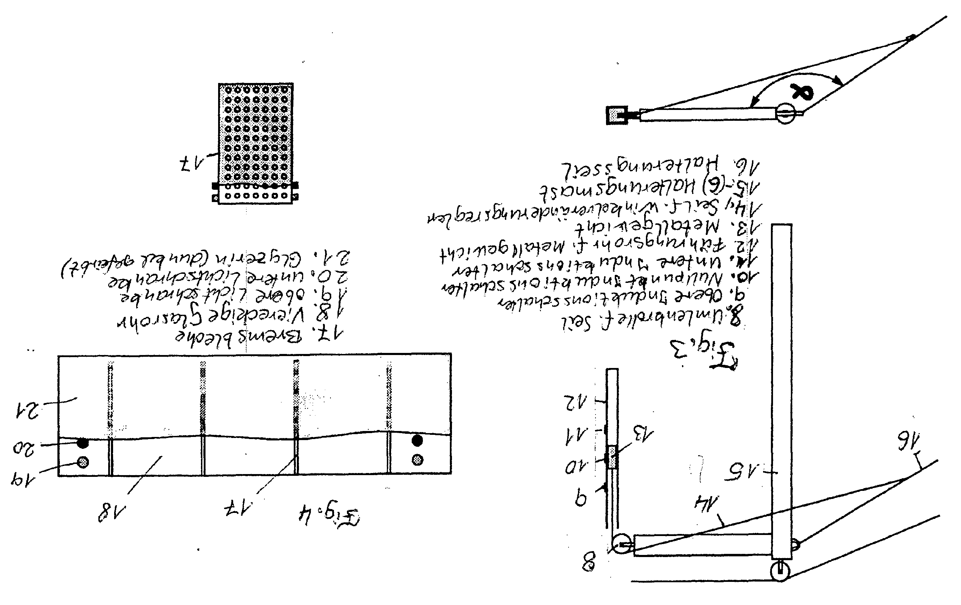

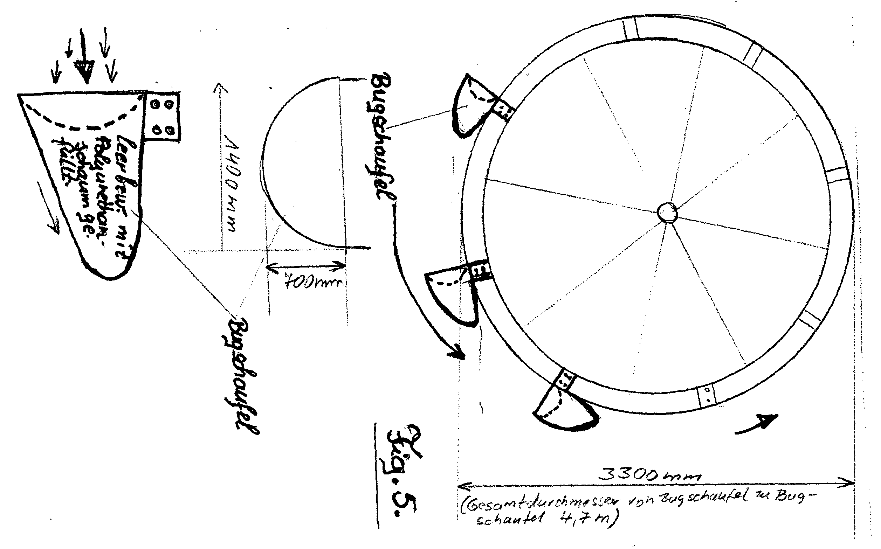

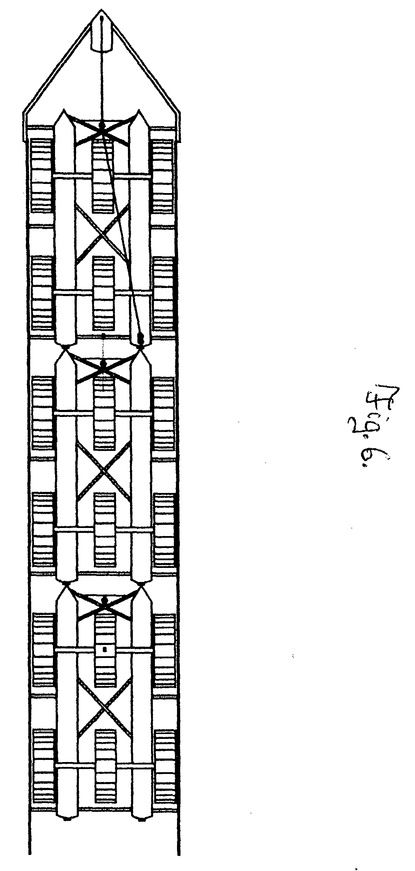

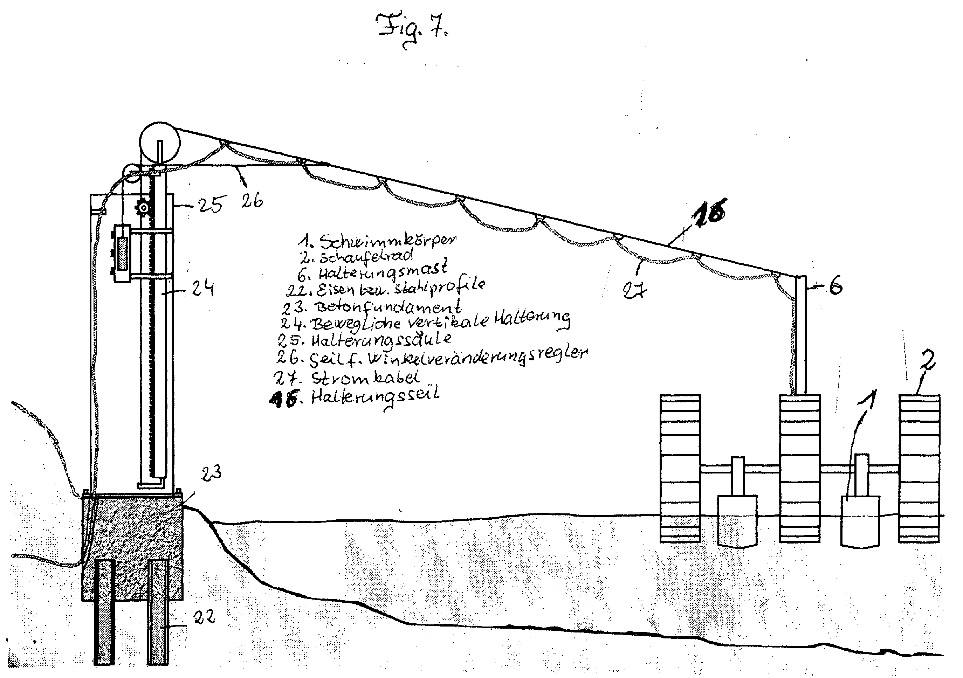

Die Schaufelräder (2) haben einen Durchmesser von ca. 5 m und sind so ausgelegt, das man sie vertikal mittels elektrisch angetriebener Spindel bewegen kann. Bei einer Betriebsstörung werden die Schaufelräder (2) automatisch so angehoben, das sie nicht mehr vom Wasser angetrieben werden. Die Kraftübertragung von der Schaufelradwelle zum Generator erfolgt durch eine Gelenkwelle. Die Bugschaufeln (Fig. 5) werden aus Glas oder mit karbonverstärktem Kunstharz hergestellt. Die Speichen bestehen aus Drahtseil.

Die komplette Schwimmanlage (meist drei gekoppelte Einheiten) Fig. 6 soll von der Uferhaltesäule (25) aus mittels einer Steckverbindung und einem tragbaren Steuerungskasten manuell steuerbar sein. Wenn die Schwimmanlage die vorgegebene Position erreicht hat, wird auf Automatik umgeschaltet.

Die Position wird durch einen Winkelveränderungsregler (Fig. 3) gehalten. Der Winkelveränderungsregler (Fig. 3) funktioniert durch das vertikale Bewegen eines magnetischen (metallischen) Gewichtes am Seilende (13) . Wenn der Winkel größer wird, bewegt sich das Metallgewicht (13) nach oben und schaltet den oberen Induktionsschalter (9) Der Induktionsschalter (9) schaltet die Rudersteuerung und die Schwimmanlage bewegt sich entgegengesetzt. Der Winkel wird kleiner und das Metallgewicht (13) am Seilende geht nach unten. Wenn es den unteren Induktionsschalter (11) erreicht schaltet der Induktionsschalter (11) die Rudersteuerung. Die Schwimmanlage (1) wird so weit entgegengesteuert, bis das Gewicht (13) am Seilende den Null - Indikationsschalter (10) erreicht. Dieser schaltet jeweils die Rudersteuerung aus.

Das Halterungsseil (16) mit dem Stromkabel (27) muss bei steigendem Wasserstand nach oben verstellt werden. Das Erfassen der Höhenänderung der Schwimmanlage und die Steuerung erfolgt durch die vertikale Winkelveränderung (26) und die dadurch resultierenden vertikalen Bewegungen des Gewichtes am Seilende (13). Die Induktionsschalter funktionieren wie bei der Positionshaltung.

Durch die Ziehkräfte des Halterungsseils kippt die Leitschwimmeinheit in Richtung Halterung. Dadurch sinkt die Halterungsseite weiter ins Wasser und die entgegengesetzte Seite hebt sich aus dem Wasser heraus. Die Schwimmeinheit und auch die Schaufelradwelle müssen waagerecht gehalten werden.

Die waagerechte Regelung (Fig. 4) wird durch mehrere Fühler gewährleistet (19,20). Die waagerechte Regelungseinrichtung (Fig. 4) besteht aus einem ca. 1 m langen, viereckigen Glasrohr (18), welches innen antihaftbeschichtet ist. Auf dem Boden des Glasrohres befinden sich mehrere Edelstahlbleche (17) und darauf werden senkrecht durchlöcherte Flüssigkeitsbremsbleche (17) aus Edelstahl geschweißt. In das Rohr kommt eine dickflüssige, dunkel gefärbte Flüssigkeit 21 (z. B. Glycerin). An beiden Enden des Glasrohres sind jeweils zwei Lichtschranken (19,20) angebracht. Wenn die Schwimmanlage (1) und die Schaufelradachse in Richtung Uferhalterung neigt, fließt die Flüssigkeit im Glasrohr (18) langsam zu der Seite, die sich tiefer im Wasser befindet. Wenn die obere Lichtschranke durch die gefärbte Flüssigkeit unterbrochen wird, schaltet die Steuerung für die Ballastwasserpumpen und die Hebespindeln. Wenn sich die Anlage und die Schaufelradachse in die Waagerechte bewegen, sinkt die gefärbte Flüssigkeit im Glasrohr. Die untere Lichtschranke tritt wieder in Funktion, die Steuerung schaltet aus.

Die schwimmende Stromerzeugungsanlage befindet sich ungefähr 1/3 der Flussbreite vom Ufer entfernt. Die Donau ist auf dem vorgesehenen ungarischen Abschnitt etwa 800 m breit. Die Verankerung bzw. Halterung (Fig. 7) der Anlagen erfolgt auf der Donau nur auf einer Uferseite. Wegen der wechselnden Wasserstände ist die Halterungssäule (24,25) ca. 6 m hoch. Der Durchmesser muss so gewählt werden, dass die beweglichen Teile im Inneren des Rohres Platz finden. Zur Installation der Halterungssäule (24,25) werden Stahlprofile (22) in den Boden gerammt. Darauf kommt dann das Betonfundament (23). Die Kabelführung erfolgt innerhalb der Säule und dann unterirdisch bis zur Übergabestelle.

## Patentansprüche

1. Transportable schwimmende Stromerzeugungsanlage, bestehend aus doppeltem Schwimmkörper (1), Schaufelrädern (2) mit Bugschaufet (Fig. 5), Abweiser (3), Positionsregelung (Fig. 3), waagerechter Regelung (Fig. 4), Stromerzeugungseinheit und diverser Teile. Desweiteren besteht die TSS aus Halterung (25), Regelung (24, 26)und Höhenverstellung (24).

2. Transportable schwimmende Stromerzeugungsanlage gemäß Anspruch 1, **dadurch gekennzeichnet, dass** die Bugschaufel (Fig. 5) eine besondere geometrische Form in Leichtbauweise erhält.

3. Transportable schwimmende Stromerzeugungsanlage gemäß Anspruch 2, **dadurch gekennzeichnet, dass** der Abweiser (3) sich vertikal frei bewegen kann und durch seine Anordnung und Bauform so in die Funktionsweise der Anlage integriert ist, das er keine bzw. geringe Turbulenzen verursacht.

4. Transportable schwimmende Stromerzeugungsanlage gemäß Anspruch 3, **dadurch gekennzeichnet, dass** die Positionsregelung (Fig. 3) punktgenaues Stationieren und Betreiben der Anlage gewährleistet. Dauerhaftes, sicheres und automatisches Betreiben der Anlage ist nur mit Positionsregelung möglich.

5. Transportable schwimmende Stromerzeugungsanlage gemäß Anspruch 4, **dadurch gekennzeichnet, dass** die waagerechte Regelung (Fig. 4) der Anlage und der Schaufelradachsen eine kontinuierliche Leistungsaufnahme garantieren.

6. Transportable schwimmende Stromerzeugungsanlage gemäß Anspruch 5, **dadurch gekennzeichnet, dass** die Wasserpegeländerung mit der Regelung (24,26) und Verstellung der Höhe ausgeglichen wird. Dies ermöglicht eine dauerhafte Stationierung der Anlage.
